# EUROPEAN PATENT SPECIFICATION

(11) **EP 3 578 831 B1**
(45) Date of publication and mention of the grant of the patent: **10.09.2025**
(21) Application number: 19179030.2
(22) Date of filing: 07.06.2019
(51) Int. Cl.: F16B 2/12, A62C 3/08, B64D 1/00, F16B 7/04, F16B 2/24, B64D 45/00

(54) **CLAMP FOR SENSORS**
KLEMME FÜR SENSOREN
PINCE POUR CAPTEURS

(30) Priority: 08.06.2018 IN 201841021562
(43) Date of publication of application: 11.12.2019
(73) Proprietor: Kidde Technologies, Inc., Wilson, NC 27896 (US)
(72) Inventor: NEWLIN, Scott Kenneth, Wilson, NC 27896 (US); LAKSHMI, Venkata Satish Babu, 560066 Bangalore (IN); NAIK, Vinod Maruti, 560066 Bangalore (IN); AVUDAIAPPAN, Thambiraj, Bangalore (IN); WALLACE, Steven Patrick, Wilson, NC 27896 (US); CHAKRAVARTHY, Kalyana, Bangalore (IN); PATIL, Rhushikesh, Bangalore (IN)
(74) Representative: Dehns

(56) References cited:
- GB-A- 2 355 754
- US-A- 2 440 469
- US-A- 5 443 232
- US-B2- 7 191 990

## Description

### BACKGROUND

The present disclosure relates to fire and overheat detection systems in aircraft and more particularly to sensor mounting fixtures for fire and overheat detection systems.

Conventional fire and overheat detection systems in aircraft engines utilize sensor circuits routed into engine areas that require monitoring for fire or overheat events. A voltage is applied to the sensor circuits and the sensor circuits have a fixed resistance when the engine is operating within proper temperature levels. Should a fire or overheat event occur in the engine, the resistance of the sensor circuit in that location of the engine will decrease in response to the increased temperatures. The decreased resistance in the sensor circuit allows detection of the fire or overheat event.

Mounting fixtures are used to hold the sensor circuits properly in place. Mounting fixtures must be robust enough to withstand the high operating temperatures and high vibration levels present in aircraft engines.
Clamp fixtures are disclosed in US 7, 191, 990 and US 2, 440, 469.

### SUMMARY

In one aspect of the invention, there is provided a clamp fixture as defined by claim 1.

In another aspect of the invention, a clamp fixture includes a hub extending between a first end and a second end. A first leg extends in a first direction from the first end of the hub, and a second leg extends in the first direction from the second end of the hub. At least a portion of the first leg curves away from the second leg, and at least a portion of the second leg curves away from the first leg. The clamp fixture also includes a loop with a first half and a second half. The first half includes a first jaw extending from the hub. The second half includes a flange and a second jaw extending from the flange. A fastener connects the flange to the hub such that the first jaw and the second jaw join to close the loop.

In another aspect of the invention, a clamp assembly includes a hub extending between a first end and a second end. A first leg extends in a first direction from the first end of the hub, and a second leg extends in the first direction from the second end of the hub. A portion of the first leg curves away from the second leg, and a portion of the second leg curves away from the first leg. A rail extends axially between the first leg and the second leg. The portion of the first leg that curves is connected to the rail and extends along a circumference of the rail. The portion of the second leg that curves is also connected to the rail and extends along the circumference of the rail. The clamp assembly includes a loop with a first half with a first jaw extending from the hub, and a second half with a flange and a second jaw extending from the flange. A fastener connects the flange to the hub such that the first jaw and the second jaw join to close the loop.

Persons of ordinary skill in the art will recognize that other aspects and embodiments of the present invention are possible in view of the entirety of the present disclosure, including the accompanying figures, as long as they fall within the wording of the appended claims.

### BRIEF DESCRIPTION OF THE DRAWINGS

FIG. 1 is a perspective view of a clamp fixture connecting a sensor to a rail.
FIG. 2 is a perspective view of the clamp fixture from FIG. 1.

While the above-identified drawing figures set forth one or more embodiments of the invention, other embodiments are also contemplated. In all cases, this disclosure presents the invention by way of representation and not limitation. It should be understood that numerous other modifications and embodiments can be devised by those skilled in the art, which fall within the scope of the invention as defined by the claims. The figures may not be drawn to scale, and applications and embodiments of the present invention may include features and components not specifically shown in the drawings. Like reference numerals identify similar structural elements.

### DETAILED DESCRIPTION

The present disclosure provides a clamp fixture with at least one loop configured to hold a sensor circuit for a fire and overheat detection system in an aircraft engine. The loop is connected to a hub, and two legs extend from the hub. As described below with reference to the Figures, the ends of the legs curve away from each other to accommodate a rail between the legs. The end of each leg is connected to the rail and extends along a circumference of the rail. The curvature of the legs distributes vibrational forces transmitted between the legs and the rail during operation of the aircraft engine, thereby reducing stress concentrations in the clamp fixture.

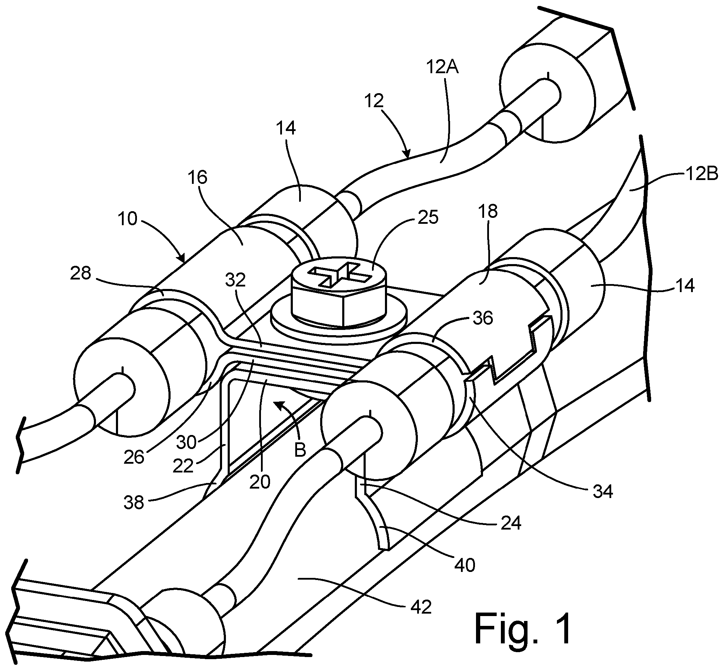

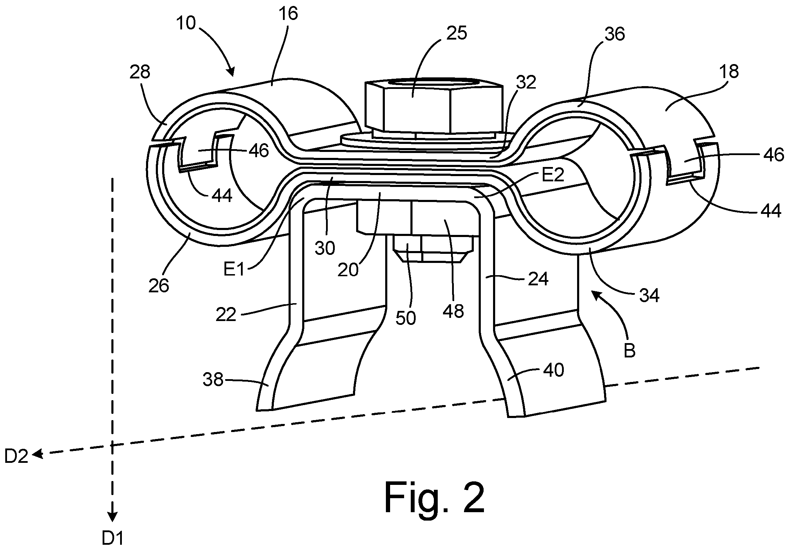

FIGS. 1 and 2 will be discussed concurrently. FIG. 1 is a perspective view of clamp fixture 10, sensor circuit 12, and grommets 14. FIG. 2 is a perspective view of clamp fixture 10 in isolation. As shown in FIGS. 1 and 2, clamp fixture 10 includes first loop 16, second loop 18, hub 20, first leg 22, second leg 24, fastener 25, first jaw 26, second jaw 28, first flange 30, second flange 32, third jaw 34, and fourth jaw 36. First leg 22 includes curved portion 38 and second leg 24 includes curved portion 40. As shown in FIG. 1, clamp fixture 10 is connected to rail 42. As shown in FIG. 2, hub 20 includes first end E1 and second end E2. First jaw 26 and third jaw 34 each include anti-rotation slot 44. Second jaw 28 and fourth jaw 36 each include anti-rotation tab 46. Fastener includes nut 48 and bolt 50.

First loop 16 and second loop 18 each receive one of grommets 14. First sensor line 12A of sensor circuit 12 extends through grommet 14 in first loop 16, and second sensor line 12B of sensor circuit 12 extends through grommet 14 in second loop 18. Grommets 14 allow first loop 16 and second loop 18 to grip first sensor line 12A and second sensor line 12B respectively without any rubbing or wear occurring between first loop 16 and second loop 18 and first sensor line 12A and second sensor line 12B respectively. Sensor circuit 12 can be a linear fire and overheat detector. First and second loops 16, 18 connect sensor circuit 12 to hub 20, and first leg 22 and second leg 24 connect hub 20 to rail 42.

Together, hub 20, first leg 22, and second leg 24 form a base B of clamp fixture 10. Hub 20 extends between first end E1 and second end E2. First leg 22 extends in a first direction D1 from first end E1 of hub 20, and second leg 24 extends in the first direction D1 from second end E2 of hub 20. Hub 20, first leg 22, and second leg 24 can be formed from a single flat metal sheet bent into shape, giving each of hub 20, first leg 22, and second leg 24 a flat profile and width extending in a second direction D2. A distal end of first leg 22 is bent to form curved portion 38, and a distal end of second leg 24 is bent to form curved portion 38. Curved portion 38 of first leg 22 curves away from second leg 24, and curved portion 40 of second leg 24 curves away from first leg 22. Rail 42 extends axially in the second direction D2 between curved portion 38 of first leg 22 and curved portion 40 of second leg 24. Rail 42 connects clamp fixture 10 to an aircraft engine (not shown). In the embodiment of FIG. 1, rail 42 is cylindrical and curved portions 38, 40 are shaped to correspond with and extend along part of the outer circumference of rail 42. Curved portions 38, 40 are connected to rail 42 by welding or brazing. The curvature of curved portions 38, 40 and axial extent/width of curved portions 38, 40 distributes vibrational forces transmitted between rail 42 and first and second legs 22, 24 during operation of an aircraft engine incorporating clamp fixture 10. Distributing the vibrational forces transmitted between rail 42 and first and second legs 22, 24 reduces stress concentrations from arising in clamp fixture 10, allowing clamp fixture 10 to remain connected to rail 42 in high-vibration environments.

As shown best in FIG. 2, first jaw 26, first flange 30, and third jaw 34 are formed from a single flat metal sheet bent into shape, giving each of first jaw 26, first flange 30, and third jaw 34 a width extending in a second direction D2. First flange 30 is positioned between first jaw 26 and third jaw 34. Together, first jaw 26, first flange 30, and third jaw 34 form a first half of first loop 16 and second loop 18. Second jaw 28, second flange 32, and fourth jaw 36 are also formed from a single flat metal sheet bent into shape, giving each of second jaw 28, second flange 32, and fourth jaw 36 a width extending in a second direction D2. Second flange 32 is positioned between second jaw 28 and fourth jaw 36. Together, second jaw 28, second flange 32, and fourth jaw 36 form a second half of first loop 16 and second loop 18. First jaw 26, second jaw 28, first flange 30, second flange 32, third jaw 34, and fourth jaw 36 can all be formed from the same material with the same gauge and uniform width as hub 20, first leg 22, and second leg 24.

First flange 30 is connected to hub 20 such that first jaw 26 extends off of hub 20 past first leg 22, and third jaw 34 extends off of hub 20 past second leg 24. In the embodiment of FIGS. 1 and 2, first flange 30, first jaw 26, and third jaw 34 are welded, brazed, or press fit to hub 20 to prevent rotation of first flange 30, first jaw 26, and third jaw 34 relative hub 20. Second flange 32 is positioned over first flange 30 such that second jaw 28 extends over first jaw 26 and joins with first jaw 26 to close first loop 16, and fourth jaw 36 extends over third jaw 34 and joins with third jaw 34 to close second loop 18.

Fastener 25 connects second flange 32 to first flange 30 and hub 20. In alternative embodiments, fastener 25 can connect both first flange 30 and second flange 32 to hub 20 instead of welding first flange 30 to hub 20. As best shown in FIG. 2, fastener 25 includes nut 48 and bolt 50. Bolt 50 extends through second flange 32, first flange 30, and hub 20, and nut 48 is threaded onto bolt 50. Nut 48 can be welded to hub 20 opposite first flange 30 to prevent rotation of nut 48 when bolt 50 is threaded into nut 48. Anti-rotation slots 44 are formed on first jaw 26 and third jaw 34, and anti-rotation tabs 46 are formed on second jaw 28 and fourth jaw 36. Anti-rotation tabs 46 mate with anti-rotation slots 44 to prevent rotation of second jaw 28 and fourth jaw 36 relative first jaw 26 and third jaw 34 respectively when bolt 50 is turned and threaded into nut 48.

In view of the foregoing description, it will be recognized that the present disclosure provides numerous advantages and benefits. For example, the present disclosure provides clamp fixture 10 with curved portions 38, 40 on first and second legs 22, 24 respectively. As previously discussed above, curved portions 38, 40 are connected to rail 42 by welding or brazing, or by tack welding and brazing. The curvature of curved portions 38, 40 distributes vibrational forces transmitted between rail 42 and first and second legs 22, 24 during operation of an aircraft engine incorporating clamp fixture 10. Distributing the vibrational forces transmitted between rail 42 and first and second legs 22, 24 reduces stress concentrations from arising in clamp fixture 10, allowing clamp fixture 10 to remain connected to rail 42 in high-vibration environments, thereby maintaining sensor circuit 12 in the correct position.

The following are non-exclusive descriptions of possible embodiments of the present invention.

In one embodiment, a clamp fixture includes a base with a hub, a first leg, and a second leg. The hub extends between a first end and a second end. The first leg extends in a first direction from the first end of the hub, and the second leg extends in the first direction from the second end of the hub. At least a portion of the first leg curves away from the second leg, and at least a portion of the second leg curves away from the first leg. The clamp fixture also includes a loop with a first half and a second half. The first half includes a first flange and a first jaw extending from the first flange. The second half includes a second flange and a second jaw extending from the second flange. A fastener connects the first flange and the second flange to the hub such that the first jaw and the second jaw join to close the loop.

The clamp fixture of the preceding paragraph can optionally include, additionally, any one or more of the following features, configurations and/or additional components:
a second loop comprising: a third jaw extending from the first flange opposite the first jaw; and a fourth jaw extending from the second flange opposite the second jaw, wherein the third jaw and the fourth jaw join to close the second loop when the first flange and the second flange are connected to the hub by the fastener;
the fastener comprises: a bolt extending through the first flange, the second flange, and the hub; and a nut on the hub opposite the first flange and the second flange;
the nut is welded, brazed, or press fit to the hub;
the first flange is welded, brazed, or press fit to the hub;
a rail extending in a second direction between the first leg and the second leg, wherein the portion of the first leg that curves is connected to the rail and extends along a circumference of the rail, and wherein the portion of the second leg that curves is connected to the rail and extends along the circumference of the rail;
the portion of the first leg that curves is welded, brazed, or press fit to the rail, and the portion of the second leg that curves is welded, brazed, or press fit to the rail; and/or
the first jaw comprises an anti-rotation slot, and the second jaw comprises an anti-rotation tab that mates with the anti-rotation slot.

In another embodiment, a clamp fixture includes a hub extending between a first end and a second end. A first leg extends in a first direction from the first end of the hub, and a second leg extends in the first direction from the second end of the hub. At least a portion of the first leg curves away from the second leg, and at least a portion of the second leg curves away from the first leg. The clamp fixture also includes a loop with a first half and a second half. The first half includes a first jaw extending from the hub. The second half includes a flange and a second jaw extending from the flange. A fastener connects the flange to the hub such that the first jaw and the second jaw join to close the loop.

The clamp fixture of the preceding paragraph can optionally include, additionally, any one or more of the following features, configurations and/or additional components:
a second loop comprising: a third jaw extending from the hub opposite the first jaw; and a fourth jaw extending from the flange opposite the second jaw, wherein the third jaw and the fourth jaw join to close the second loop when the flange is connected to the hub by the fastener;
the fastener comprises: a bolt extending through the flange and the hub; and a nut on the hub opposite the flange;
the nut is welded, brazed, or press fit to the hub, and wherein the first jaw is welded, brazed, or press fit to the hub;
a rail extending in a second direction between the first leg and the second leg, wherein the portion of the first leg that curves is connected to the rail and extends along a circumference of the rail, and wherein the portion of the second leg that curves is connected to the rail and extends along the circumference of the rail; and/or
the portion of the first leg that curves is welded, brazed, or press fit to the rail, and the portion of the second leg that curves is welded, brazed, or press fit to the rail.

In another embodiment, a clamp assembly includes a hub extending between a first end and a second end. A first leg extends in a first direction from the first end of the hub, and a second leg extends in the first direction from the second end of the hub. A portion of the first leg curves away from the second leg, and a portion of the second leg curves away from the first leg. A rail extends axially between the first leg and the second leg. The portion of the first leg that curves is connected to the rail and extends along a circumference of the rail. The portion of the second leg that curves is also connected to the rail and extends along the circumference of the rail. The clamp assembly includes a loop with a first half with a first jaw extending from the hub, and a second half with a flange and a second jaw extending from the flange. A fastener connects the flange to the hub such that the first jaw and the second jaw join to close the loop.

The clamp assembly of the preceding paragraph can optionally include, additionally, any one or more of the following features, configurations and/or additional components:
a second loop comprising: a third jaw extending from the hub opposite the first jaw; and a fourth jaw extending from the flange opposite the second jaw, wherein the third jaw and the fourth jaw join when the flange is connected to the hub by the fastener;
the fastener comprises: a bolt extending through the flange and the hub; and a nut on the hub opposite the flange;
the nut is welded, brazed, or press fit to the hub, and wherein the first and third jaw are welded, brazed, or press fit to the hub; and/or
the portion of the first leg that curves is welded, brazed, or press fit to the rail, and the portion of the second leg that curves is welded, brazed, or press fit to the rail.

Any relative terms or terms of degree used herein, such as "substantially", "essentially", "generally", "approximately", and the like, should be interpreted in accordance with and subject to any applicable definitions or limits expressly stated herein. In all instances, any relative terms or terms of degree used herein should be interpreted to broadly encompass any relevant disclosed embodiments as well as such ranges or variations as would be understood by a person of ordinary skill in the art in view of the entirety of the present disclosure, such as to encompass ordinary manufacturing tolerance variations, incidental alignment variations, transitory vibrations and sway movements, temporary alignment or shape variations induced by operational conditions, and the like.

While the invention has been described with reference to an exemplary embodiment(s), it will be understood by those skilled in the art that various changes may be made without departing from the scope of the invention. For example, while FIGS. 1 and 2 show clamp fixture 10 with two loops (first loop 16 and second loop 18), some embodiments clamp fixture 10 can have a single loop. Therefore, it is intended that the invention not be limited to the particular embodiment(s) disclosed, but that the invention will include all embodiments falling within the scope of the appended claims.

## Claims

1. A clamp fixture comprising:
a hub (20) extending between a first end (E1) and a second end (E2);
a first leg (22) extending in a first direction from the first end of the hub;
a second leg (24) extending in the first direction from the second end of the hub, wherein a distal end of the first leg is bent away from the second leg to form a first curved portion (38) and a distal end of the second leg is bent away from the first leg to form a second curved portion (40), and the first curved portion and the second curved portion are configured to distribute vibrational forces transmitted to the first and second legs during operation of an aircraft engine;
a loop (16) comprising:
a first half with a first flange (30) and a first jaw (26) extending from the hub; and
a second half with a second flange (32) and a second jaw (28) extending from the second flange wherein the hub, the first leg, the second leg, the first flange and the second flange have a uniform width in a second direction; and
a fastener (25) connecting the first flange and the second flange to the hub such that the first jaw and the second jaw join to close the loop.

2. The clamp fixture of claim 1 further comprising:
a second loop (18) comprising:
a third jaw (34) extending from the hub opposite the first jaw; and
a fourth jaw (36) extending from the second flange opposite the second jaw,
wherein the third jaw and the fourth jaw join to close the second loop when the first flange (30) and the second flange (32) are connected to the hub by the fastener (25).

3. The clamp fixture of claim 1 or 2, wherein the fastener comprises:
a bolt (50) extending through the first flange (30) and the hub (20); and
a nut (48) on the hub opposite the first flange.

4. The clamp fixture of claim 3, wherein the nut is welded, brazed, or press fit to the hub, and wherein the first jaw is welded, brazed, or press fit to the hub.

5. The clamp fixture of any preceding claim, further comprising:
a rail (42) extending in a second direction between the first leg and the second leg, wherein the first curved portion is connected to the rail and extends along a circumference of the rail, and wherein the second curved portion is connected to the rail and extends along the circumference of the rail.

6. The clamp fixture of claim 5, wherein the first curved portion is welded, brazed, or press fit to the rail, and the second curved portion is welded, brazed, or press fit to the rail.

7. The clamp fixture of any preceding claim, wherein the first jaw comprises an anti-rotation slot, and the second jaw comprises an anti-rotation tab that mates with the anti-rotation slot.

8. The clamp fixture of claim 1 further comprising:
a second loop (18) comprising:
a third jaw (34) extending from the hub opposite the first jaw; and
a fourth jaw (36) extending from the second flange opposite the second jaw,
wherein the third jaw and the fourth jaw join when the first flange (30) and the second flange (32) are connected to the hub by the fastener (25).

9. The clamp fixture of claim 8, wherein the fastener comprises:
a bolt (50) extending through the first flange (30) and the hub (20); and
a nut (48) on the hub opposite the first flange.

10. The clamp fixture of claim 9, wherein the nut is welded, brazed, or press fit to the hub, and wherein the first and third jaws are welded, brazed, or press fit to the hub.

11. The clamp fixture of claim 9 or 10, wherein the portion of the first leg that curves is welded, brazed, or press fit to the rail, and the portion of the second leg that curves is welded, brazed, or press fit to the rail.

## Patentansprüche

1. Klemmvorrichtung, umfassend:
eine Nabe (20), die sich zwischen einem ersten Ende (E1) und einem zweiten Ende (E2) erstreckt;
einen ersten Schenkel (22), der sich vom ersten Ende der Nabe in eine erste Richtung erstreckt;
einen zweiten Schenkel (24), der sich vom zweiten Ende der Nabe in die erste Richtung erstreckt, wobei ein distales Ende des ersten Schenkels vom zweiten Schenkel weggebogen ist, um einen ersten gekrümmten Abschnitt (38) zu bilden, und ein distales Ende des zweiten Schenkels vom ersten Schenkel weggebogen ist, um einen zweiten gekrümmten Abschnitt (40) zu bilden, und der erste gekrümmte Abschnitt und der zweite gekrümmte Abschnitt so konfiguriert sind, dass sie während des Betriebs eines Flugzeugtriebwerks auf den ersten und den zweiten Schenkel übertragene Vibrationskräfte verteilen;
eine Schlaufe (16), umfassend:
eine erste Hälfte mit einem ersten Flansch (30) und einer ersten Backe (26), die sich von der Nabe erstreckt; und
eine zweite Hälfte mit einem zweiten Flansch (32) und einer zweiten Backe (28), die sich vom zweiten Flansch erstreckt, wobei die Nabe, der erste Schenkel, der zweite Schenkel, der erste Flansch und der zweite Flansch in einer zweiten Richtung eine einheitliche Breite aufweisen; und
ein Befestigungselement (25), das den ersten Flansch und den zweiten Flansch mit der Nabe verbindet, sodass die erste und die zweite Backe zusammenkommen, um die Schlaufe zu schließen.

2. Klemmvorrichtung nach Anspruch 1, ferner umfassend:
eine zweite Schlaufe (18), umfassend:
eine dritte Backe (34), die sich von der Nabe gegenüber der ersten Backe erstreckt; und
eine vierte Backe (36), die sich vom zweiten Flansch gegenüber der zweiten Backe erstreckt,
wobei die dritte Backe und die vierte Backe zusammenkommen, um die zweite Schlaufe zu schließen, wenn der erste Flansch (30) und der zweite Flansch (32) durch das Befestigungselement (25) mit der Nabe verbunden sind.

3. Klemmvorrichtung nach Anspruch 1 oder 2, wobei das Befestigungselement umfasst:
eine Schraube (50), die sich durch den ersten Flansch (30) und die Nabe (20) erstreckt; und
eine Mutter (48) auf der Nabe gegenüber dem ersten Flansch.

4. Klemmvorrichtung nach Anspruch 3, wobei die Mutter an der Nabe angeschweißt, angelötet oder mit Presspassung befestigt ist, und wobei die erste Backe an der Nabe angeschweißt, angelötet oder mit Presspassung befestigt ist.

5. Klemmvorrichtung nach einem der vorhergehenden Ansprüche, ferner umfassend:
eine Schiene (42), die sich in einer zweiten Richtung zwischen dem ersten Schenkel und dem zweiten Schenkel erstreckt, wobei der erste gekrümmte Abschnitt mit der Schiene verbunden ist und sich entlang eines Umfangs der Schiene erstreckt, und wobei der zweite gekrümmte Abschnitt mit der Schiene verbunden ist und sich entlang des Umfangs der Schiene erstreckt.

6. Klemmvorrichtung nach Anspruch 5, wobei der erste gekrümmte Abschnitt an die Schiene angeschweißt, angelötet oder mit Presspassung befestigt ist und der zweite gekrümmte Abschnitt an die Schiene angeschweißt, angelötet oder mit Presspassung befestigt ist.

7. Klemmvorrichtung nach einem der vorhergehenden Ansprüche, wobei die erste Backe einen Verdrehsicherungsschlitz umfasst und die zweite Backe eine Verdrehsicherungslasche umfasst, die mit dem Verdrehsicherungsschlitz zusammenpasst.

8. Klemmvorrichtung nach Anspruch 1, ferner umfassend:
eine zweite Schlaufe (18), umfassend:
eine dritte Backe (34), die sich von der Nabe gegenüber der ersten Backe erstreckt; und
eine vierte Backe (36), die sich vom zweiten Flansch gegenüber der zweiten Backe erstreckt,
wobei die dritte Backe und die vierte Backe zusammenkommen, wenn der erste Flansch (30) und der zweite Flansch (32) durch das Befestigungselement (25) mit der Nabe verbunden sind.

9. Klemmvorrichtung nach Anspruch 8, wobei das Befestigungselement umfasst:
eine Schraube (50), die sich durch den ersten Flansch (30) und die Nabe (20) erstreckt; und
eine Mutter (48) auf der Nabe gegenüber dem ersten Flansch.

10. Klemmvorrichtung nach Anspruch 9, wobei die Mutter an der Nabe angeschweißt, angelötet oder mit Presspassung befestigt ist, und wobei die erste und dritte Backe an der Nabe angeschweißt, angelötet oder mit Presspassung befestigt sind.

11. Klemmvorrichtung nach Anspruch 9 oder 10, wobei der gekrümmte Abschnitt des ersten Schenkels an die Schiene angeschweißt, angelötet oder mit Presspassung befestigt ist und der gekrümmte Abschnitt des zweiten Schenkels an die Schiene angeschweißt, angelötet oder mit Presspassung befestigt ist.

## Revendications

1. Élément de serrage comprenant :
un moyeu (20) s'étendant entre une première extrémité (E1) et une seconde extrémité (E2) ;
une première patte (22) s'étendant dans une première direction à partir de la première extrémité du moyeu ;
une seconde patte (24) s'étendant dans la première direction à partir de la seconde extrémité du moyeu, dans lequel une extrémité distale de la première patte est pliée à l'opposé de la seconde patte afin de former une première partie incurvée (38) et une extrémité distale de la seconde patte est pliée à l'opposé de la première patte afin de former une seconde partie incurvée (40), et la première partie incurvée et la seconde partie incurvée sont conçues pour distribuer des forces de vibration transmises aux première et seconde pattes pendant le fonctionnement d'un moteur d'aéronef ;
une boucle (16) comprenant :
une première moitié avec une première bride (30) et une première mâchoire (26) s'étendant à partir du moyeu ; et
une seconde moitié avec une seconde bride (32) et une deuxième mâchoire (28) s'étendant à partir de la seconde bride, dans lequel le moyeu, la première patte, la seconde patte, la première bride et la seconde bride présentent une largeur uniforme dans une seconde direction ; et
une attache (25) reliant la première bride et la seconde bride au moyeu de sorte que la première mâchoire et la deuxième mâchoire se rejoignent pour boucler la boucle.

2. Élément de serrage selon la revendication 1 comprenant en outre :
une seconde boucle (18) comprenant :
une troisième mâchoire (34) s'étendant à partir du moyeu à l'opposé de la première mâchoire ; et
une quatrième mâchoire (36) s'étendant à partir de la seconde bride à l'opposé de la deuxième mâchoire,
dans lequel la troisième mâchoire et la quatrième mâchoire se rejoignent pour boucler la seconde boucle lorsque la première bride (30) et la seconde bride (32) sont reliées au moyeu par l'attache (25).

3. Élément de serrage selon la revendication 1 ou 2, dans lequel l'attache comprend :
un boulon (50) s'étendant à travers la première bride (30) et le moyeu (20) ; et
un écrou (48) sur le moyeu à l'opposé de la première bride.

4. Élément de serrage selon la revendication 3, dans lequel l'écrou est soudé, brasé ou ajusté par pression au moyeu, et dans lequel la première mâchoire est soudée, brasée ou ajustée par pression au moyeu.

5. Élément de serrage selon l'une quelconque revendication précédente, comprenant en outre :
un rail (42) s'étendant dans une seconde direction entre la première patte et la seconde patte, dans lequel la première partie incurvée est reliée au rail et s'étend le long d'une circonférence du rail, et dans lequel la seconde partie incurvée est reliée au rail et s'étend le long de la circonférence du rail.

6. Élément de serrage selon la revendication 5, dans lequel la première partie incurvée est soudée, brasée ou ajustée par pression au rail, et la seconde partie incurvée est soudée, brasée ou ajustée par pression au rail.

7. Élément de serrage selon l'une quelconque revendication précédente, dans lequel la première mâchoire comprend une fente anti-rotation, et la deuxième mâchoire comprend une languette anti-rotation qui s'accouple avec la fente anti-rotation.

8. Élément de serrage selon la revendication 1 comprenant en outre :
une seconde boucle (18) comprenant :
une troisième mâchoire (34) s'étendant à partir du moyeu à l'opposé de la première mâchoire ; et
une quatrième mâchoire (36) s'étendant à partir de la seconde bride à l'opposé de la deuxième mâchoire,
dans lequel la troisième mâchoire et la quatrième mâchoire se rejoignent lorsque la première bride (30) et la seconde bride (32) sont reliées au moyeu par l'attache (25).

9. Élément de serrage selon la revendication 8, dans lequel l'attache comprend :
un boulon (50) s'étendant à travers la première bride (30) et le moyeu (20) ; et
un écrou (48) sur le moyeu à l'opposé de la première bride.

10. Élément de serrage selon la revendication 9, dans lequel l'écrou est soudé, brasé ou ajusté par pression au moyeu, et dans lequel les première et troisième mâchoires sont soudées, brasées ou ajustées par pression au moyeu.

11. Élément de serrage selon la revendication 9 ou 10, dans lequel la partie de la première patte qui se courbe est soudée, brasée ou ajustée par pression au rail, et la partie de la seconde patte qui se courbe est soudée, brasée ou ajustée par pression au rail.
